# EUROPEAN PATENT SPECIFICATION

(11) **EP 3 313 112 B1**
(45) Date of publication and mention of the grant of the patent: **22.04.2020**
(21) Application number: 16810991.6
(22) Date of filing: 15.06.2016
(51) Int. Cl.: H04W 16/02, H04L 29/06

(54) **INDOOR WIRELESS COMMUNICATION NETWORK AND INTERNET OF THINGS SYSTEM**
DRAHTLOSKOMMUNIKATIONSNETZ FÜR INNENRÄUME UND SYSTEM FÜR INTERNET DER DINGE
RÉSEAU DE COMMUNICATION SANS FIL EN INTÉRIEUR ET SYSTÈME DE L'INTERNET DES OBJETS

(30) Priority: 16.06.2015 CN 201510338466; 10.10.2015 CN 201510651146
(43) Date of publication of application: 25.04.2018
(73) Proprietor: Zhao, Yijun, Shanghai 200122 (CN)
(72) Inventor: Zhao, Yijun, Shanghai 200122 (CN)
(74) Representative: Kutzenberger Wolff & Partner
(86) International application number: PCT/CN2016/085801
(87) International publication number: WO 2016/202250

(56) References cited:
- WO-A1-2015/070743
- CN-A- 102 035 703
- CN-A- 102 932 849
- CN-A- 102 984 037
- CN-A- 104 602 404
- US-A1- 2011 133 655
- US-A1- 2013 026 953

## Description

### FIELD OF THE INVENTION

The invention relates to communication technology, and in particular, to an indoor wireless communication network and an internet system of things based on the indoor wireless communication network. WO 2015/070743 A1 discloses an indoor wireless network.

### BACKGROUND

Internet of things is a network which is based on information carrier such as internet, conventional telecommunication network or the like, and which can realize interconnection and intercommunication of common physical objects that can be addressed independently. The internet of things actually needs to solve the problem of interconnection of the last 10 meters; in such a range, the density of connectable devices will be increased in geometric series.

The technical system framework of internet of things comprises perception level technology, network level technology and application level technology. While the technologies of mobile communication, internet or the like have become relatively mature after years of rapid development and can substantially meet requirements of data transmission of the internet of things, there are still several technical bottlenecks. For example, as far as the network level technology is concerned, information perceived through transmission with high reliability and high security is necessary. However, on the other side, providing access to connectable devices having a high density will consume much electrical power. Therefore, the reliability and security of transmission and low power consumption become a dilemma. When considering a cross-protocol communication capability and high expansibility requirement, the difficulty in solving the problem will be further increased.

According to the statistics, 80% of human activities occur in indoor environments, and therefore the quality of indoor signal coverage will become the problem of paramount importance in the internet of things. Currently, while there are several wireless technologies (e.g., Bluetooth, Zigbee and WiFi) available in indoor wireless communication, all of them have weaknesses. For example, the WiFi technology has high power consumption, which is not suitable for sensors; moreover, many public places realize the deployment of WiFi based on the mode of operation authority; when there are a plurality of operators providing Wi-Fi access service simultaneously, the influence of channel interference cannot be ignored. Further, for the Bluetooth and Zigbee technologies, transmission distances thereof are limited. Therefore, receiver terminal devices of sensor signal have to be deployed in an indoor environment on a large scale, thus leading to a considerable installation cost.

The internet of things has three major characteristics of perception, things-to-things interconnection and intelligentization. Currently, the application of internet of things has gradually infiltrated into various fields, and the information security problem caused thereby has drawn common concern and worry from experts and the public.

As can be seen from the above, how to implement the internet system of things in a way of low cost, high security and high reliability is a major challenge confronted by the technology of internet of things.

### SUMMARY OF THE INVENTION

An object of the invention is to provide an indoor wireless communication network, which has such advantages as low cost of construction, high security, high reliability, etc. The invention is defined by the appended claims.

The indoor wireless communication network according to an aspect of the invention comprises:
a plurality of wireless communication modules, each of which is disposed in an associated indoor lighting device, and which are configured such that they can communicate with each other and communicate with devices nearby; and
sink nodes, which are configured such that they can establish communication connection with the wireless communication modules and can establish communication connection with a network external to the indoor wireless communication network.

Preferably, in the above indoor wireless communication network, the sink nodes are wireless communication modules disposed in associated indoor lighting devices.

Preferably, in the above indoor wireless communication network, the sink nodes are wireless communication modules disposed in the following devices: router, POS machine, power adapter, home base station, modem, set-top box, household appliance and PC machine.

Preferably, in the above indoor wireless communication network, each wireless communication module is further configured to provide an access ability to wireless devices in respective coverage areas for them to access the indoor wireless communication network.

Preferably, in the above indoor wireless communication network, each wireless communication module is further configured to receive wireless signal from wireless devices in respective coverage areas.

Preferably, in the above indoor wireless communication network, the sink nodes enable the wireless communication modules to communicate with a network external to the indoor wireless communication network via the sink nodes by providing a gateway function.

Preferably, in the above indoor wireless communication network, the sink nodes are further configured to execute an application processing function based on the wireless signal.

Preferably, in the above indoor wireless communication network, a device external to the indoor wireless communication network is configured to execute an application processing function based on the wireless signal.

Preferably, in the above indoor wireless communication network, the indoor wireless communication network is a wireless self-organized network.

Preferably, in the above indoor wireless communication network, the lighting device is a LED lighting device, which comprises an adaptive power supply, and a wireless transceiver is integrated into the adaptive power supply and is supplied power by the adaptive power supply.

Preferably, in the above indoor wireless communication network, the wireless communication modules support at least one of the following protocol stacks: Bluetooth communication protocol stack, Wi-Fi communication protocol stack, ANT wireless network protocol stack and Zigbee communication protocol stack.

Preferably, in the above indoor wireless communication network, the adaptive power supply is implemented in a form of printed circuit board (PCB), the wireless communication modules are implemented in a form of integrated circuit and are disposed on the PCB as components.

Preferably, in the above indoor wireless communication network, the adaptive power supply is implemented in a form of printed circuit board (PCB), the wireless communication modules are implemented in a form of a chip of System-on-Chip (SoC) and are disposed on the PCB as elements and components.

Preferably, in the above indoor wireless communication network, a device external to the indoor wireless communication network can realize on-line upgrading of the wireless communication modules by using Over-the-Air Technology (OTA).

Preferably, in the above indoor wireless communication network, the wireless devices are at least one of the following devices: cell-phone, laptop, tablet computer and wearable device.

Preferably, in the above indoor wireless communication network, the wireless devices are wireless communication modules disposed in at least one of the following devices: router, set-top box, household appliance, electricity meter, water meter, gas meter, household appliance and computer system.

Preferably, in the above indoor wireless communication network, the wireless devices are wireless sensors.

Preferably, in the above indoor wireless communication network, the sink nodes communicate with a device external to the indoor wireless communication network via a wireless channel.

Preferably, in the above indoor wireless communication network, the sink nodes communicate with a device external to the indoor wireless communication network via a wired medium.

Preferably, in the above indoor wireless communication network, the wired medium is power line.

Preferably, in the above indoor wireless communication network, the indoor wireless communication network uses one of the following network topologies: star network topology, mesh-like network topology, cluster network topology and cluster tree network topology.

Preferably, in the above indoor wireless communication network, each wireless communication module is further configured to transmit wireless signal and receive corresponding wireless reflected signal.

Preferably, in the above indoor wireless communication network, an object is positioned or an invader detection is conducted based on the wireless reflected signal inside or outside the indoor wireless communication network.

Preferably, in the above indoor wireless communication network, the plurality of wireless communication modules are divided into a plurality of network node groups, and for each network node group, communication between wireless communication modules inside it are based on the same communication protocol.

Preferably, in the above indoor wireless communication network, at least one wireless communication module is designated in each network node group as a routing node which is configured to be responsible for communication between this network node group and the sink nodes and the routing nodes of other network node groups.

Preferably, in the above indoor wireless communication network, the communication protocol used for the communication between one of the routing nodes and other routing nodes or between one of the routing nodes and the sink nodes is different from the communication protocol used for an internal communication of the network node group to which this routing node belongs.

Preferably, in the above indoor wireless communication network, at least one wireless communication module is designated in each network node group as a main access node, and correspondingly, the wireless communication modules of other non-routing nodes are designated as auxiliary access nodes, wherein the main access node is configured to conduct initialization configuration and dynamic configuration of the network node group to which it belongs as well as communication with the auxiliary access nodes and the routing node.

Preferably, in the above indoor wireless communication network, the main access node and the routing node are the same one wireless communication module.

Preferably, in the above indoor wireless communication network, in each of the network node groups, the auxiliary access node only allows communication with the main access node or the routing node.

An object of the invention is to provide an internet system of things, which has such advantages as low cost of construction, high security, high reliability, etc.

The internet system of things according to another aspect of the invention comprises a cloud computing platform and an indoor wireless communication network, and the indoor wireless communication network comprises:
a plurality of wireless communication modules, each of which is disposed in an associated indoor lighting device, and which are configured such that they can communicate with each other and communicate with devices nearby; and
sink nodes, which are configured such that they can establish communication connection with the wireless communication modules and can establish communication connection with the cloud computing platform;
wherein the cloud computing platform is configured to manage an authority for a client to establish communication connection with said devices by being connected to the indoor wireless communication network via the sink nodes.

Preferably, in the above internet system of things, a path of the communication connection of the client and the devices is via the cloud computing platform and the sink nodes.

Preferably, in the above internet system of things, a path of the communication connection of the client and the devices is via the sink nodes directly.

Preferably, in the above internet system of things, the cloud computing platform is further configured to manage an authority for the client to operate the devices.

Preferably, in the above internet system of things, the operations on the devices by the client comprise acquiring operational states of the devices and controlling operation of the devices.

Preferably, in the above internet system of things, the cloud computing platform is further configured to manage the client to configure the authority of the indoor wireless communication network via the sink nodes.

Preferably, in the above internet system of things, the wireless communication modules are configured to communicate with each other based on a first communication protocol, and to communicate with said devices based on a second communication protocol different from the first communication protocol; the sink nodes and the cloud computing platform are configured to communicate with each other based on a third communication protocol different from the first communication protocol and the second communication protocol, wherein data related to the operations on the devices by the client is application level data of the first communication protocol, the second communication protocol and the third communication protocol.

Preferably, in the above internet system of things, the wireless communication modules are configured to prohibit resolving the application level data.

Preferably, in the above internet system of things, the sink nodes and the cloud computing platform communicate with each other via a wireless channel.

Preferably, in the above internet system of things, the sink nodes and the cloud computing platform communicate with each other via a wired medium.

As compared to the prior art, the above indoor wireless communication network and internet system of things can build a network with high density of nodes at an approximately zero cost (a physical installation of the nodes is accomplished at the same time of installing the lighting devices), by taking full advantage of the characteristic of numerous and widely distributed lighting devices. Further, the LED lighting devices is typically equipped with an in-built adaptive power supply, which is naturally advantageous for the integration of a wireless communication transceiver into the lighting device, and the problem of power supplying is solved very easily. Furthermore, the application level data is "transparently" transmitted to the cloud computing platform so that resolving in the indoor wireless communication network is prohibited, thus improving the security of data transmission.

### BRIEF DESCRIPTION OF THE DRAWINGS

The above and/or other aspects and advantages of the present invention will become more apparent and more readily understood from the following description of the various aspects, taken in connection with the accompanying drawings, wherein the same or similar elements in the drawings are denoted by the same reference numerals; in the drawings:
Fig. 1 is a schematic view of the indoor wireless communication network according to a first embodiment of the present invention.
FIG. 2 is a layout view of a house of an exemplary residence unit.
Fig. 3 is a schematic diagram of the indoor wireless communication network according to a second embodiment of the present invention.
Fig. 4 is a schematic view of the wireless communication network according to a third embodiment of the present invention.
FIG. 5 is a schematic view of the internet system of things according to a fourth embodiment of the present invention.
Fig. 6 is a schematic diagram of the indoor wireless communication network according to a fifth embodiment of the present invention.

### DETAILED DESCRIPTION OF THE INVENTION

The present invention will be described more fully hereinafter with reference to the accompanying drawings, in which illustrative embodiments of the invention are shown. However, the present invention may be embodied in different forms and should not be construed as being limited to the individual embodiments given herein. The above individual embodiments given herein are intended to make the disclosure full and complete so as to convey the scope of protection of the invention more fully to those skilled in the art.

In the present specification, the term "lighting device" should be broadly understood as all the devices that can achieve practical or aesthetically pleasing effects by providing rays of lights, and it comprises, but is not limited to, bulb lamps, desk lamps, panel lamps, down lamps, wall lamps, spotlight, fluorescent lamps, chandeliers, ceiling lights, street lights, flashlights, stage lights and cityscape lights.

The term "LED lighting device" refers to lighting devices that employ light emitting diodes (LEDs) as light sources, and it comprises for example, but is not limited to, PN junction inorganic semiconductor light emitting diodes and organic light emitting diodes (OLEDs and polymer light emitting diodes (PLEDs)).

The term "building" refers to spaces and entities that are built from construction materials, and is a place for people to live in and perform various activities in.

The term "indoor" refers to a space area created using material technical means, based on the nature of use of the building and the environment in which it is located, and it comprises for example, but is not limited to, an area inside the building and an area adjacent to the building.

The term "adaptive power supply" or "drive power supply" refers to an "electronic control device" connected between an alternating current (AC) or direct current (DC) power supply external to the LED lighting device and a light emitting diode serving as a light source, for providing the required current or voltage (such as constant current, constant voltage or constant power, etc.) to the light emitting Diode. In a specific embodiment, the drive power supply may be implemented in a modular structure, for example, it includes a printed circuit board and one or more components mounted on the printed circuit board and electrically connected together by wiring. Examples of these components comprise but are not limited to LED drive controller chip, rectifying chip, resistor, capacitor, inductor and transformer or the like.

The term "wireless communication module" refers to an electronic device which can realize the function of transmitting and receiving wireless signal, and which may be implemented, for example, in the form of an integrated circuit or in the form of a combination of a plurality of discrete electronic components.

The term "cloud computing technology" or "cloud computing" refers to a way of providing computing ability that abstracts underlying technology architectures (such as server, storage, and network) as computing resources so that a shared pool that can configure computing resources can be accessed over the network conveniently and as required, and the computing resources can be provided and released quickly at fewer management cost or through an interaction with the service provider. According to different natures of cloud computing services, cloud computing can be divided into public cloud, private cloud and hybrid cloud. According to different levels, cloud computing can be divided into infrastructure-as-a-service (IaaS), platform-as-a-service (PaaS) and software as a service (SaaS).

The term "cloud computing platform" or "cloud platform" refers to an IT infrastructure capable of providing cloud computing services having various service properties and at various levels.

"Coupled" should be understood as including the case of direct transmission of electrical energy or electrical signal between two units or the case of indirect transmission of electrical energy or electrical signal via one or more third units.

Expressions such as "contain" and "include" indicate that in addition to the units and steps that have been described directly and explicitly in the specification and claims, the technical solutions of the present invention do not exclude a situation having other units and steps that have not been described directly or explicitly.

Expressions such as "first" and "second" do not indicate the order of units in terms of time, space, size, etc., but only serve to distinguish the units.

According to one aspect of the present invention, the wireless communication modules are disposed within the lighting device and are communicatively coupled to each other so as to build an indoor wireless communication network. Since the wireless communication modules serving as network nodes can be distributed in various indoor areas together with lighting devices, the coverage and node density of the network are greatly increased. The above indoor wireless communication network may employ various network topologies, including but not limited to a star network topology, a mesh-like network topology, a cluster network topology, and a cluster tree network topology. In addition, in view of the fact that the lighting device is installed without considering the network optimization factor and it is generally fixed after installation, it is preferable that the network nodes be provided with the capability of self-networking. In the following description, unless otherwise specified, the terms wireless communication module and network node are used interchangeably.

One or more of the above wireless communication modules may be selected as a sink node for connecting the established indoor wireless communication network with an external network or a cloud computing platform, and other wireless communication modules may communicate with the external network or the cloud computing platform through the sink node. The external network can for example be, but is not limited to, a telecommunication provider network, a cable television network, a mobile communication system, an enterprise private network, or the like. The sink node may be connected to the external network or cloud computing platform via a wireless channel or a wired medium. In particular, the sink node can communicate with a remote meter reading system in the form of power line carrier via the power line. As can be seen from the description below, the wireless communication modules can be built in the adaptive power supply of the LED lighting device, which is advantageous for the realization of power line carrier communication.

It should be pointed out that in the above-mentioned indoor wireless communication network, it is not necessary to place all the network nodes in the lighting device. For example, the node as the sink node can be arranged at a physical location other than the lighting device. In particular, such a network node may be, for example, a wireless communication module integrated in the following devices: router, POS machine, power adapter, home base station, modem, set-top box, household appliance and PC machine or the like.

According to another aspect of the present invention, on one hand, the wireless communication modules provided in the lighting device constitute network nodes of the indoor wireless communication network so as to realize the transmission of data inside the indoor wireless communication network, and on the other hand, the wireless communication modules also function as access nodes which communicates bi-directionally with wireless devices external to the indoor communication network so as to provide access services. As a result, the indoor wireless communication network functions both as a transmission network and an access network, and the network nodes are somewhat similar to "micro base stations" (but unlike mobile communication systems, the micro base stations may be communicatively connected directly, whereas in the mobile communication system, the base station is connected to a wireless network controller), the wireless device communication in the coverage area of the indoor wireless communication network can be connected to the external network or the cloud computing platform via the above access nodes and sink nodes. For example, a blood glucose meter with wireless communication capability may upload user's blood glucose monitoring data to a remote medical monitoring system via the indoor wireless communication network, or may receive a medication reminder or a fitness instruction from a remote medical monitoring system. The wireless devices described herein may be, for example, mobile devices such as, but not limited to, cell-phones, laptop, tablet computer, and wearable device. In addition, the wireless devices may also be wireless communication modules disposed in a fixed device such as, but not limited to, router, set-top box, electricity meter, water meter, gas meter, household appliance, security device, entrance guard system, POS machine and printer. In addition, the wireless devices may also be various wireless sensors, for example, including but not limited to wireless temperature sensor, wireless humidity sensor, wireless light intensity sensor and wireless flue gas sensor.

Preferably, a network configuration function of the indoor wireless communication network is only provided in the above sink nodes, and other network nodes do not have the configuration function. Accordingly, the external network or client can only perform the network configuration operation by invoking the network configuration function of the sink nodes. Preferably, an authentication mechanism is provided for invoking the network configuration function, thereby preventing illegal or unauthorized configuration operations. The network configuration operations herein include, but are not limited to, interconnecting a plurality of network nodes to form an indoor wireless communication network, adding or deleting network nodes within an indoor wireless communication network, and upgrading a program running within a network node.

Alternatively, the wireless communication modules as the network nodes (including the sink nodes and the access nodes) only uni-directionally receive or detect wireless signal transmitted by the wireless devices external to the indoor wireless communication network and then execute applications based on the wireless signal inside or outside the indoor wireless communication network. Such applications include, for example but not limited to, positioning (e.g., determining a location based on Bluetooth signal received from wireless devices such as cell-phone and wearable device), resource consumption monitoring (e.g., receiving resource consumption information according to an electric energy metering device installed on household appliance, a gas metering device installed on water heater, a water metering device mounted on water meter, and a wireless communication module on heat metering devices, etc.), household appliance operating condition monitoring and control (e.g., acquiring fault code of household appliance), health condition monitoring (e.g., monitoring health condition based on signal received from a body-worn monitor) and environment detection (e.g., when the wireless device is a wireless temperature sensor, a wireless humidity sensor, a wireless light intensity sensor, a flue gas sensor, etc.)

Alternatively, the wireless communication modules as the network nodes (including the sink nodes and the access nodes) may also transmit wireless signal and receive corresponding wireless reflected signal, and then execute applications based on the wireless reflected signal inside or outside the indoor wireless communication network. Such applications include, for example but not limited to, positioning (e.g., determining the location of an object based on wireless reflected signal from the object) and invader detection (e.g., determining whether there is an object entering the monitored area based on the intensity and/or spectrum of the wireless reflected signal), etc.

When the above applications involve a client external to the indoor wireless communication network, it is preferable that the client be allowed to access the indoor wireless communication network via the sink nodes only with the authorization of the cloud computing platform, thereby establishing communication connection with wireless devices indoor within the coverage of the indoor wireless communication network. More preferably, the client's operation authorities to the wireless devices (for example, including but not limited to, acquiring the operation conditions of the wireless devices and controlling the operation of the wireless devices) are also managed by the cloud computing platform. Since the cloud computing platform typically has a relatively complete and powerful security management capability (such as identity authentication, access authorization, comprehensive protection and security audit, etc.), and therefore placing the client's access authority and operation authority under the management of the cloud computing platform is very advantageous.

It should be noted that after the client obtains authorization from the cloud computing platform to access the indoor wireless communication network, the path of the communication connection between the client and the wireless device may be via the cloud computing platform and the sink nodes, or may be via the sink nodes directly.

It should be pointed out that when there are enough indoor wireless communication networks with the above functions and architectures that are interconnected, a wide area internet system of things will be constructed. As will be seen from the description below, numerous applications based on the "last 10 meters" level can be provided by means of this communication infrastructure, including, for example, but not limited to, indoor positioning of target, accurate push of merchant advertisements, remote monitoring and maintenance of household appliance, parking guidance in a parking lot, etc.

According to still another aspect of the present invention, the lighting device in which the wireless communication module is disposed preferably employs a LED lighting device. LED is typically required to operate at constant current, constant voltage, or constant power, so existing LED lighting devices are typically equipped with an adaptive power supply to convert electrical energy from an external power supply (e.g., AC mains) into electrical energy having a constant voltage, a constant current or a constant power that is suitable for LED operation requirement. In general, in addition to the adaptive power supply, the LED lighting device includes a LED light source and a housing or a base (e.g., a spotlight lamp cup, a fluorescent lamp tube, a bulb lamp housing, etc.) that houses the LED light source. In a typical arrangement, both the adaptive power supply and the LED light source are disposed inside the housing or the base; in another typical arrangement, the adaptive power supply is separate from the housing or base that houses the LED light source; and in further another typical arrangement, the LED light source is integrated inside the adaptive power supply (e.g., the LEDs are placed on a circuit board of the adaptive power supply). As will be seen from the description below, the present invention is applicable to the above various arrangements.

Preferably, the wireless communication modules are integrated into the adaptive power supply of the LED lighting device as circuit modules and are powered by the latter. As described above, the adaptive power supply can be implemented in a modular structure, and typically includes a printed circuit board and components mounted on the printed circuit board and electrically connected together by wiring. Preferably, the wireless communication modules take the form of integrated circuit, and are arranged on the printed circuit board as components and are electrically connected with other components so as to achieve the function of receiving and transmitting wireless signal. Considering the functional independence of the wireless communication module from the adaptive power supply, system-in-package (SIP) and 3D packaging techniques can be used to integrate multiple chips in a single package so as to achieve substantially complete wireless communication function. System-on chip (SoC) is an application specific integrated circuit that integrates microprocessors, analog IP cores, digital IP cores, storages or the like. Alternatively, the wireless communication module may also be implemented in the form of system-on chip (SoC). In addition, the system-on chip provides external programming capabilities and is therefore particularly advantageous for on-line upgrading wireless communication modules by devices external to the indoor wireless communication network in an in-application-programming (IAP) manner, after the lighting device is installed.

The above feature of providing an adaptive power supply in the LED lighting device makes it easier and more convenient to place the wireless communication modules in the lighting device, and a power supply (e.g., storage units such as a battery and an ultra-capacitor, etc.) dedicatedly provided for the wireless communication modules is also dispensed with. In particular, many LED lighting devices for indoor commercial environments currently use an arrangement in which an adaptive power supply is independent from the housing or base for accommodating the LED light source. Therefore, the LED lighting devices can be upgraded to have a network node function by changing the adaptive power supply. In addition, since the wireless communication module is built in the adaptive power supply, a physical layout of the network nodes of the indoor wireless communication network can be completed with the installation of the LED lighting device equipped with the wireless communication modules, thus greatly reducing the networking cost. As a new generation light source, LED has many advantages such as energy saving, safety and long service life, and with the cost reduction, its application will become increasingly widespread. Under such a technical trend, the technical and economic advantages of the technical solution of the present invention for building an indoor wireless communication network by using the wireless communication modules disposed in the lighting device will become more prominent.

According to still another aspect of the present invention, the communication between the wireless communication modules is based on a first communication protocol. The first communication protocol may be a protocol stack with a hierarchical structure. The protocol stack includes, for example, but is not limited to, a Bluetooth communication protocol stack, a Wi-Fi communication protocol stack, a Zigbee communication protocol stack, or the like. Considering the coexistence of multiple protocol stacks, the wireless communication module can support multiple protocol stacks simultaneously and automatically identify the protocol stack used by the wireless device that intends to access the indoor wireless communication. In addition, the communication between the wireless communication module and the wireless device is based on a second communication protocol, which may be different from or the same as the first communication protocol. The communication between the sink node and the cloud computing platform is based on a third communication protocol. Preferably, the third communication protocol is different from the first and second communication protocols.

For the above communication protocols, data related to the client's operation on the wireless device is considered as application level data. Preferably, the wireless communication module is configured to prohibit resolving the application level data, i.e., the application level data is "transparently" transmitted between the client and the wireless device.

An embodiment of the indoor wireless communication network that realizes the above functions and structures will be described below by means of the drawings.

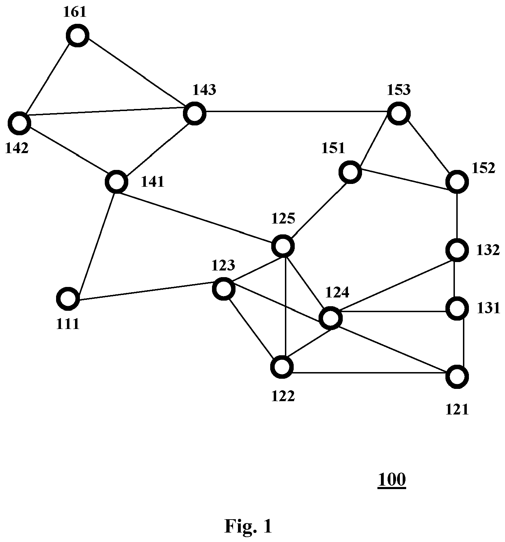

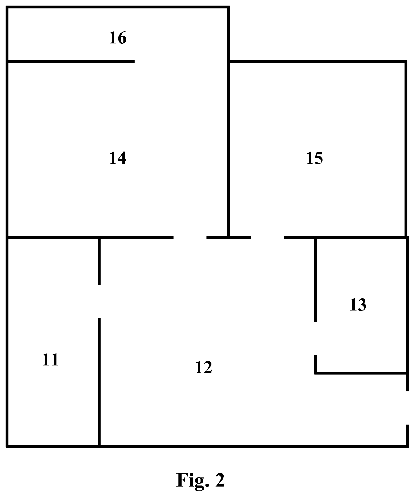

Fig. 1 is a schematic view of the indoor wireless communication network according to a first embodiment of the present invention. By way of example, it is assumed that the indoor wireless communication network shown in Fig. 1 is built inside a residence unit shown in Fig. 2.

For ease of description, different areas of the residence unit are identified by two-digit numbers in Fig. 2; for example, 11 represents the kitchen, 12 represents the living room, 13 represents the bathroom, 14 and 15 represent the bedroom, and 16 represents the balcony. Correspondingly, the LED lighting device in each area is identified by a three-digit number, wherein the first two digits represent the area number and the last digit represents the serial number of the LED lighting device in this area.

In this embodiment, the wireless communication modules serving as the network nodes of the indoor wireless communication network is built in the adaptive power supply of the LED lighting device so that these nodes can be distributed apartment residence unit together with the LED lighting device. It should be noted that since each of such wireless communication modules or network nodes is associated with a corresponding one of the lighting devices, they are also identified by three-digit numbers in the above format unless otherwise specified.

As shown in Fig. 1, the indoor wireless communication network 100 includes wireless communication modules 111, 121-125, 131-132, 141-143, 151-153 and 161 as network nodes. In the format described above, reference numeral 111 denotes the wireless communication module or network node inside the first lighting device in the kitchen, reference numerals 121-125 respectively denote the wireless communication modules or network nodes inside the first to fifth lighting devices in the living room, and for the rest of the wireless communication modules or network nodes, the same way of numbering also applies.

The solid lines in Fig. 1 indicate that a direct communication connection can be established between two wireless communication modules. While not all of the paired wireless communication modules in the indoor wireless communication network 100 shown in FIG. 1 can realize a direct communication connection, an indirect communication connection can be realized for them by using other wireless communication modules as relays, thus realizing various communication modes such as peer to peer, broadcast (one wireless communication module sends signal to all other wireless communication modules in the indoor wireless communication network 100) or multicast (one wireless communication module sends signal to some other wireless communication modules in the indoor wireless communication network 100), etc. For example, the wireless communication module 161 on the balcony 16 may communicate with the wireless communication module 121 via a signal path formed by the wireless communication modules 143, 124, and 122, and may also communicate with the wireless communication module 121 via a signal path formed by the wireless communication modules 142, 141, 124.

In the present embodiment, at least one of the wireless communication modules 111, 121-125, 131-132, 141-143, 151-153 and 161 is configured as a sink node and the remaining wireless communication modules are configured access nodes that communicate with wireless devices nearby. It is to be noted that, in this embodiment and embodiments to be described below, one wireless communication module may be configured to have the functions of sink node and access node simultaneously.

In the case shown in Fig. 2, considering that the wireless communication module 121 is close to an entrance door and requires less wireless transmission power to communicate with a device outside the door (for example, a wireless access point of a meter reading system), the wireless communication module 121 is configured as the sink node. However, this is not necessary. For example, when it is required to interconnect the indoor wireless communication network 100 with a broadband telecommunication network or a cable television network, the wireless communication module 125 may also be configured as the sink node, wherein the wireless communication module 125 is located adjacent to a wireless router that is connected to an optical modem or a cable modem. In this embodiment, the sink node may be configured to provide a gateway function so as to enable an interconnection between the indoor wireless communication network 100 and the external network when the two networks use different protocols. Alternatively, the gateway function may also be provided inside a device external to the indoor wireless communication network 100 (such as the aforementioned wireless access point for meter reading system, the optical modem and the cable modem, etc.), and the date transmitted to the outside of the indoor wireless communication network 100 from each wireless communication module is forwarded to the external device via the wireless communication module 125 configured as the sink node.

An exemplary application scene is described below, which realizes the collection of resource consumption data based on the indoor wireless communication network shown in Fig. 1. In this scene, it is assumed that a gas metering device and a water metering device having wireless communication capability are installed in the kitchen 11, an electricity metering device having wireless communication capability is installed in the living room 12, and the wireless communication module 121 serving as the sink node provides a gateway function.

The remote meter reading system sends a collection request to the network node 121 serving as the sink node via its wireless access point, so as to start the collection process. In response to the collection request, the network node 121 converts the collection request into an electricity consumption collection command message, a gas consumption collection command message, and a water consumption collection command message. Preferably, these messages may contain an identifier of a destination receiving device and an address of an associated network node. For example, when the destination device is an electricity metering device, the address of the network node points to the network node 121. For another example, when the destination device is a gas metering device, the address of the network node points to the network node 111. Subsequently, the network node 121 sends an electricity consumption collection command message to the electricity metering device, and sends a gas consumption collection command message and a water consumption collection command message to the network node 122, which in turn forwards the received command messages to the network node 123, and the network node 123 forwards the command messages to the network node 111. In response to receipt of the command messages, the network node 111 sends the gas consumption collection command message and the water consumption collection command message to the gas metering device and the water metering device respectively.

In response to receipt of the command messages, the electricity metering device returns an electricity consumption confirmation message to the network node 121, wherein the electricity consumption confirmation message includes an identifier of the electricity metering device and a meter reading indicating the electricity consumption. In the meantime, the gas metering device and the water metering device, in response to the receipt of the respective command message, return the gas consumption confirmation message and the water consumption confirmation message to the network node 111. These messages contain the identifiers of the metering devices and the associated meter readings. The network node 111 in turn sends these confirmation messages to the network node 121 via the network nodes 123, 122.

At the network node 121, these confirmation messages are converted into collection confirmation messages which are returned to the wireless access point of the remote meter reading system. Then, the remote meter reading system processes the collected resource consumption data (e.g., energy consumption analysis and charging, etc.).

In the above scene, the network nodes in the indoor wireless communication 100 provide an access capability to the devices (herein, the above wireless access points and various metering devices) located in the respective coverage areas for them to access the indoor wireless communication network so that communication between the devices is realized.

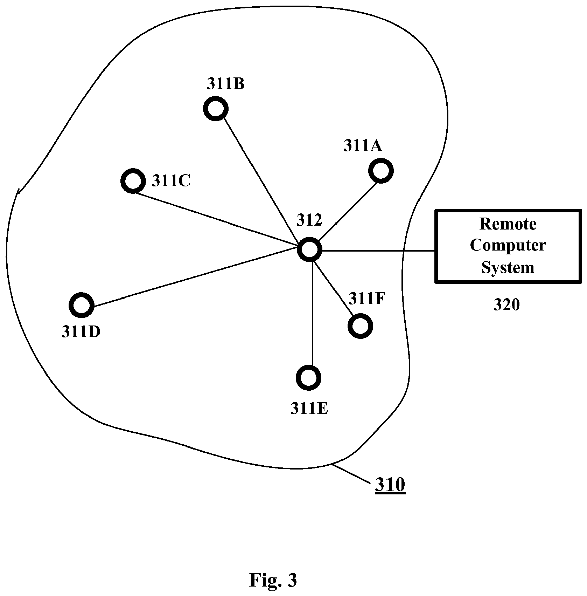

Fig. 3 is a schematic diagram of the indoor wireless communication network according to a second embodiment of the present invention.

In this embodiment, the indoor wireless communication network 310 comprises wireless communication modules 311A-311F serving as wireless access nodes and a wireless communication module 312 serving as the sink node, wherein the wireless communication modules 311A-311F are built into the adaptive power supply of an associated LED lighting device, and the wireless communication module 312 may be built into the adaptive power supply of an associated LED lighting device or may be arranged at a different physical location than the LED lighting device. The wireless communication module 312 may exist as an independent wireless communication device, for example, and may also be integrated into various devices such as, but not limited to, router, POS machine, power adapter, home base station, modem, set-top box, household appliance and PC machine or the like.

As shown in Fig. 3, a direct communication connection is established between each of the wireless access nodes 311A-311F and the sink node 312 (such communication connection is shown by solid lines in the figure). By means of the sink node 312, an indirect communication connection can be realized among the wireless access nodes 311A-311F so as to implement various communication modes such as peer-to-peer, broadcast or multicast. On the other hand, the wireless access nodes 311A-311F may also communicate with devices external to the indoor wireless communication network 310 (e.g., including but not limited to positioning server, advertisement push system, online payment system, etc.) via the sink node 312.

In this embodiment, the wireless access points 310A-310F are adapted to provide an access capability to the devices nearby (e.g., cell-phone, laptop computer, tablet computer, wearable devices, etc.) for them to access the indoor wireless communication network 300. As a result, the wireless devices can communicate with remote computer systems such as positioning server, advertisement push system, online payment system or the like via the indoor wireless communication network 300.

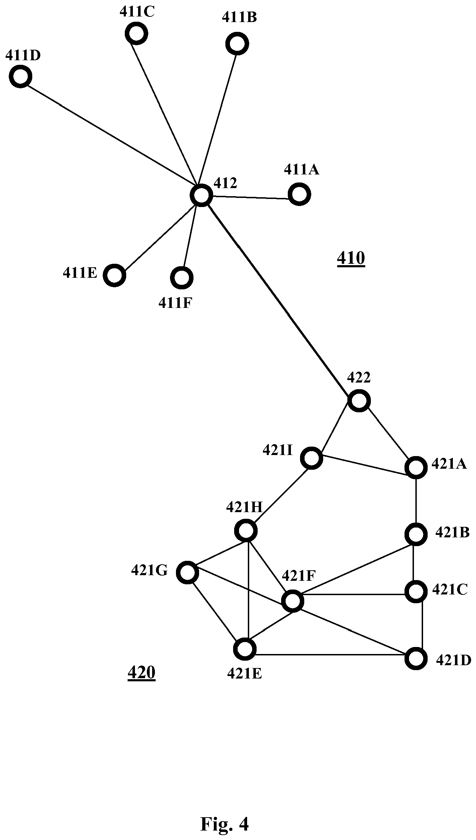

FIG. 4 is a schematic view of a wireless communication network built based on the indoor wireless communication network according to a third embodiment of the present invention.

The wireless communication network 400 according to this embodiment comprises two indoor wireless communication networks 410 and 420, each of which comprises wireless access nodes and sink nodes, wherein the wireless access nodes are built into the adaptive power supply of an associated LED lighting device, and the sink nodes may be built into the adaptive power supply of an associated LED lighting device or may be arranged at a different physical location than the LED lighting device. The sink nodes may exist as independent wireless communication devices, for example, and may also be integrated into various devices such as, but not limited to, router, POS machine, power adapter, home base station, modem, set-top box, household appliance and PC machine or the like.

As shown in Fig. 4, a direct communication connection is established between each of the wireless access nodes 411A-411F and the sink node 412, and the wireless access nodes 421A-421I in the indoor wireless communication network 422 can be communicatively connected with the sink node 422 directly or indirectly. As a result, various communication modes such as peer-to-peer, broadcast or multicast can be realized for the wireless access nodes in their respective indoor wireless communication networks. On the other hand, communication coupling can be established between the sink nodes 412 and 422, thus realizing interconnection between the indoor wireless communication network 410 and 420. Alternatively, the sink nodes 412 and 422 may also communicate with devices external to the indoor wireless communication network (e.g., including but not limited to positioning server, advertisement push system, online payment system, etc.).

The wireless communication network of this embodiment can be applied to public places such as shopping malls. For example, such a public place may be divided into a plurality of areas, a corresponding indoor wireless communication network may be built for each area, and the indoor wireless communication networks may be interconnected through direct or indirect (for example, via cable) communication connection between the sink nodes.

It should be noted that the number of indoor wireless communication networks included in the wireless communication network in this embodiment is merely exemplary, and more indoor wireless communication networks may actually be included, thereby covering a larger geographic area.

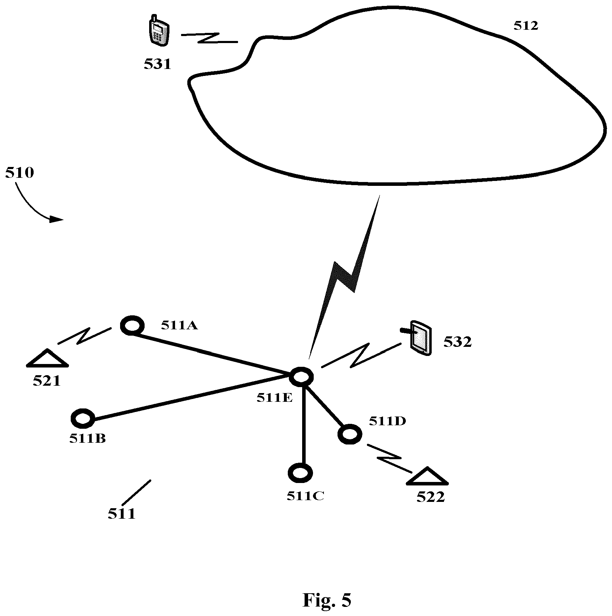

Fig. 5 is a schematic view of an internet of things system according to a fourth embodiment of the present invention.

The internet system of things 510 according to the present embodiment comprises an indoor wireless communication network 511 and a cloud computing platform 512. The indoor wireless communication network 511 may be an indoor wireless communication network having the various features and aspects described above. The cloud computing platform 512 may be an IT infrastructure capable of providing cloud computing services with various service properties and at various levels. The Cloud computing services with various service properties described herein include, for example, public cloud, private cloud, and hybrid cloud, etc. The cloud computing services at various levels include, for example, infrastructure-as-a-service (IaaS), platform-as-a-service (PaaS) and software as a service (SaaS).

Illustratively, as shown in Fig. 5, each of the wireless access nodes 511A-511D inside the indoor wireless communication network 511 establishes a direct communication connection with the sink node 511E, and the wireless access nodes may also have a direct communication connection, or an indirect communication connection via a sink node. The sink node 511E is coupled to the cloud computing platform 512. In addition, the wireless access nodes 511A and 511D are capable of communicating with the devices 521 and 522, respectively. Examples of devices 521 and 522 include, but are not limited to, at least one of the following devices that have wireless communication capabilities: router, set-top box, electricity meter, water meter, gas meter, household appliance, security device, entrance guard system, POS machine, health care device and printer.

With reference to Fig. 5, the remote client 531 may access the indoor wireless communication network 510 via the cloud computing platform 512 and the sink node 511E so as to establish communication connection with the devices 521 and 522. The local client 532 may access the indoor wireless communication network 511 via the sink node 511E so as to establish communication connection with the devices 521 and 522.

In this embodiment, the authority for the clients 531 and 532 to access the indoor wireless communication network 511 is managed by the cloud computing platform 512. That is, when the client 531 or 532 intend to access the indoor wireless communication network 511, the cloud computing platform 512 will authenticate them. Only after the authentication is passed, the clients 531 and 532 are allowed to access the indoor wireless communication network 511 via the sink node 511E, and then establish communication connection with the devices 521 and 522. As described above, the cloud computing platform 512 also manages clients 531 and 532's authority on the operation of devices 521 and 522.

The client 531, after obtaining authorization from the cloud computing platform 512, will communicate with the device 521 via a path that includes the cloud computing platform 512, the sink node 511E, and the access node 511A, and will communicate with the device 522 via a path that includes the cloud computing platform 512, the sink node 511E and the access node 511D; and the client 532, after obtaining authorization, will communicate with devices 521 and 522 directly via the sink node and corresponding access node.

An exemplary application scene for realizing the monitoring of the state of household appliance and the collection of environmental data based on the internet system of things shown in Fig. 5 will be described below. In this scene, it is assumed that the device 521 is an air conditioner having wireless communication capability and the device 522 is a temperature sensor having wireless communication capability.

A remote client 531 (for example, a smart phone) sends a temperature signal collection request to the sink node 511E via the cloud computing platform 512, so as to start the collection process. In response to the collection request, the cloud computing platform 512 determines whether the client 531 has the authority to access the indoor wireless communication network 511, and forwards the collection request to the sink node 511E if it has the authority. At the sink node 511E, the collection request is converted into a temperature signal collection command message which is transmitted to the wireless access node 511A. Alternatively, the sink node 511E broadcasts the temperature signal collection command message within the indoor wireless communication network 511. Preferably, the message contains the identifier of a destination receiving device (herein, the identifier of the device 522) and the address of an associated network node (the address herein points to the wireless communication module 511D) or the like. Subsequently, the wireless communication module 511D sends a temperature signal collection command message to the device 522. In response to receipt of the command message, the device 522 sends a confirmation message to the wireless communication module 511D, which contains the identifier of the device and a real-time room temperature measurement. The wireless communication module 511D in turn sends the confirmation message to the remote client 521 via the sink node 511E and the cloud computing platform 512.

At the remote client 521, if the user determines that the air conditioner needs to be turned on based on the indoor temperature measurement, the cloud computing platform 512 sends an air conditioner control request to the sink node 511E, which contains the identifier of the controlled air conditioner and a set target temperature value associated with the air conditioner. In response to the air conditioner control request, the cloud computing platform 512 determines whether the client 531 has the authority to access the indoor wireless communication network 511 and, if it has the authority, the air conditioner control request is forwarded to the sink node 511E. At the sink node 511, the air conditioner control request is converted into an air conditioner control command message which is transmitted to the wireless access node 511A. Alternatively, the sink node 511E may broadcast the air conditioner control command message within the indoor wireless communication network 511. Alternatively, the message contains the identifier of a destination receiving device (herein, the identifier of the device 521), the address of an associated network node (the address herein points to the wireless communication module 511A), a set target temperature value, or the like. Subsequently, the wireless communication module 511A sends an air conditioner control command message to the device 521. In response to receipt of the command message, the device 521 sends a confirmation message to the wireless communication module 511A, which contains the identifier of the device. The wireless communication module 511A in turn sends the confirmation message to the remote client 531 via the sink node 511E and the cloud computing platform 512.

Another exemplary application scene based on the internet system of things shown in Fig. 5 is described below, which is used to implement the control of opening and closing of door and window in a living room. In this scene, it is assumed that the device 521 is a door and window opening/closing controller provided with wireless communication capability.

The local client 532 (e.g., a tablet computer) sends a door and window opening/closing control command to the sink node 511E. This command is converted to an authentication request message at the sink node 511E which is forwarded to the cloud computing platform 512. In response to receipt of the authentication request message, the cloud computing platform 512 determines whether the client 532 has the authority to access the indoor wireless communication network 511, and if it has the authority, a confirmation message that allows the requested access of the client is returned to the sink node 511E; otherwise, a denial message is returned. The sink node 511E then converts the door and window opening/closing control command into a control command message which is transmitted to the wireless communication module 511A. Alternatively, the sink node 511E may also broadcast a door and window opening/closing control command within the indoor wireless communication network 511. Preferably, the message contains the identifier of a destination receiving device (herein, the identifier of device 521) and the address of an associated network node (the address herein points to the wireless communication module 511A). Subsequently, the wireless communication module 511A sends a command message of establishing communication connection to the device 521. In response to receipt of the communication connection command message, the device 521 sends a confirmation message to the wireless communication module 511A, and the confirmation message is forwarded to the client 532 via the sink node 511E. Therefore, a path for communication connection is established between the client 532 and the device 521, and the client 532 can control the opening and closing of the door and window through the device 521.

It should also be noted that in the embodiment shown in Fig. 5, each of the wireless access nodes inside the indoor wireless communication network has a direct communication connection with the sink node, but alternatively, a part of these wireless access nodes may also be indirectly connected with the sink node via other wireless access nodes. In this case, said part of the wireless access nodes may forward the control command to the sink node via other wireless access nodes in the indoor wireless communication network.

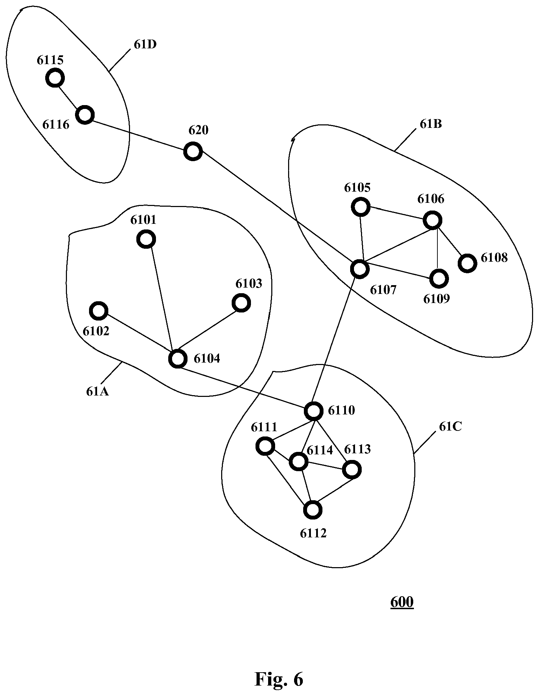

Fig. 6 is a schematic view of the indoor wireless communication network according to a fifth embodiment of the present invention. The indoor wireless communication network 600 according to the present embodiment comprises wireless access nodes 6101-6116 and a sink node 620, wherein the wireless access nodes are built into the adaptive power supply of an associated LED lighting device, and the sink node may be built into the adaptive power supply of an associated LED lighting device or may be arranged at a different physical location than the LED lighting device. The sink node may exist as an independent wireless communication device, for example, and may also be integrated into various devices such as, but not limited to, router, POS machine, power adapter, home base station, modem, set-top box, household appliance and PC machine or the like. In this embodiment, the sink node 620 is configured to provide a gateway function so as to enable interconnection between the indoor wireless communication network 600 and an external network (such as, but not limited to, mobile communication network, optical fiber access network (FTTB/FTTH), cable digital television broadband access network and wireless LAN, etc.).

In the indoor wireless communication network shown in Fig. 6, the wireless access nodes 6101-6116 are grouped so as to form several sub-networks. For example, the wireless access nodes 6101-6104 form a network node group 61A, the wireless access nodes 6105-6109 form a network node group 61B, the wireless access nodes 6110-6114 form a network node group 61C, and the wireless access nodes 6115-6116 form a network node group 61D. As for the sink node 620, it may be divided into one of the network node groups (for example, the network node group 61D), or may be independent from the network node groups 61A-61D.

In this embodiment, for each network node group, the communication between the internal nodes is based on the same communication protocol, which may be a protocol stack with a hierarchical structure, for example, including but not limited to Bluetooth communication protocol stack, WiFi communication protocol stack, ANT wireless network protocol stack and Zigbee communication protocol stack. etc.

Preferably, at least one routing node (e.g., wireless access nodes 6104, 6107, 6110, and 6116 in Fig. 6) is designated in each network node group and is responsible for the communication between the network node group with the sink node gateway and the routing nodes of other network node groups. This communication can also be based on Bluetooth communication protocol stack, WiFi communication protocol stack, ANT wireless network protocol stack and Zigbee communication protocol stack, etc. In this embodiment, the communication protocol used for communication between the routing nodes or between the routing node and the sink node may be different from or the same as the communication protocol used for the internal communication of the network node group to which the routing node belongs.

Preferably, at least one main access node (e.g., the wireless access nodes 6104 (which is also a routing node at the same time), 6106, 6114 and 6116 in Fig. 6) may also be designated in the network node group. Correspondingly, the remaining non-routing nodes are designated as auxiliary access nodes (e.g., wireless access nodes 6101-6103, 6105, 6108, 6109, 6111-6113 and 6115 in Fig. 6). The main access node is the core node in the network node group, through which an initialization configuration and dynamic configuration of the node groups and the communication with the auxiliary access nodes and the routing nodes can be realized. The physical location of the main access node is preferably inside the lighting device. It should be noted that both the main access node and the routing nodes may be implemented by the same physical hardware entity (for example, the wireless access node 6104 in Fig. 6) or may be disposed in the same lighting device. The auxiliary access nodes may be located inside the lighting device and be responsible for access of external wireless devices, or the auxiliary access nodes themselves may also be external wireless devices (e.g., a wireless signal transceiver or a wireless sensor in a household appliance) that are added into the network node group. Preferably, in order to reduce the complexity, for example, as with the network node groups 61A and 61B of Fig. 6, only the communication of the auxiliary access nodes and the main access node or the routing nodes is allowed, and a direct communication between the auxiliary access nodes is prohibited, although the auxiliary access nodes can have direct communication capabilities.

In this embodiment, for each network node group, it may adopt various network topologies, including but not limited to star network topology, mesh-like network topology, cluster network topology, cluster tree network topology, etc.

In this embodiment, the grouping of nodes may be based on various factors such as, but not limited to, the spatial location of the node, the protocol support type of the node, the type of external wireless device served by the node, etc.

While some aspects of the invention have been illustrated and discussed, it will be appreciated by those skilled in the art that various changes may be made to the above-described aspects.

## Claims

1. An indoor wireless communication network (600), comprising:
a plurality, at least three, of wireless communication modules (6101-6116), each of which is disposed in an associated indoor lighting device, the plurality of wireless communication modules are (6101-6116) configured to be able to communicate with each other and communicate with devices nearby; and
one or more sink nodes (620) configured to be able to establish communication connection with the wireless communication modules (6101-6116) and establish communication connection with a network external to the indoor wireless communication network (600),
wherein the wireless communication modules (6101-6116) constitute network nodes of the indoor wireless communication network (600) so as to realize data transmission inside the indoor wireless communication network (600), and function as access nodes which communicates bi-directionally with wireless devices external to the indoor communication network (600) so as to provide access services,
wherein the lighting device is a LED lighting device, which comprises an adaptive power supply, and each of the wireless communication modules is integrated into the adaptive power supply and is supplied by the adaptive power supply.

2. The indoor wireless communication network (600) according to claim 1, wherein each of the wireless communication module (6101-6116) is further configured to provide an access ability to wireless devices in respective coverage areas for them to access the indoor wireless communication network (600).

3. The indoor wireless communication network (600) according to claim 1, wherein the plurality of wireless communication modules (6101-6116) are divided into a plurality of network node groups (61A - 61D), and for each of the network node groups (61A - 61D), communication between wireless communication modules (6101-6116) inside it are based on the same communication protocol.

4. The indoor wireless communication network (600) according to claim 3, wherein at least one of the wireless communication modules (6101-6116) in each network node group (61A - 61D) is designated as a routing node (6116, 6107, 6104, 6110) configured to be responsible for communication between this network node group (61A - 61D) and the sink nodes (620) and between this network node group (61A - 61D) and routing nodes (6116, 6107, 6104, 6110) of other network node groups (61A- 61D).

5. The indoor wireless communication network (600) according to claim 4, wherein the communication protocol used for the communication between the routing nodes (6116, 6107, 6104, 6110) or between the routing nodes (6116, 6107, 6104, 6110) and the sink nodes (620) is different from the communication protocol used for internal communication within the network node groups (61A - 61D).

6. The indoor wireless communication network (600) according to claim 3, wherein at least one wireless communication module (6101-6116) in each network node group (61A - 61D) is designated as a main access node (6104, 6106, 6114, 6116), and correspondingly, wireless communication modules of other non-routing nodes are designated as auxiliary access nodes, wherein the main access node (6104, 6106, 6114, 6116) is configured to conduct initialization configuration and dynamic configuration for the network node group (61A - 61D) to which it belongs as well as communication with the auxiliary access nodes and the routing node (6116, 6107, 6104, 6110).

7. An internet system of things (520) comprising a cloud computing platform (512) and an indoor wireless communication network (511), comprising:
a plurality, at least three, of wireless communication modules (511A - 511D), each of which is disposed in an associated indoor lighting device, the plurality of wireless communication modules (511A - 511D) are configured to be able to communicate with each other and communicate with devices nearby (521, 522); and
one or more sink nodes (511E) configured to be able to establish communication connection with the wireless communication modules (511A - 511D) and establish communication connection with the cloud computing platform (512),
wherein the cloud computing platform (512) is configured to manage an authority granted to a client (531, 532) to establish communication connection with said devices (521, 522) by connecting to the indoor wireless communication network (510) via the sink nodes (511E),
wherein the wireless communication modules (511A - 511D) constitute network nodes (511A - 511D) of the indoor wireless communication network so as to realize data transmission inside the indoor wireless communication network, and function as access nodes (511A, 511D) which communicates bi-directionally with wireless devices (521, 422) external to the indoor communication network (510) so as to provide access services,
wherein the lighting device is a LED lighting device, which comprises an adaptive power supply, and each of the wireless communication modules (511A - 511D) is integrated into the adaptive power supply and is supplied by the adaptive power supply.

8. The internet system of things (520) according to claim 7, wherein the cloud computing platform (512) is further configured to manage an authority granted to the client (531, 532) to operate the devices (521, 522).

9. The internet system of things (520) according to claim 8, wherein operation on the devices (521, 522) by the client (531, 532) comprise acquiring operational states of the devices (521, 522) and controlling operation of the devices (521, 522).

## Patentansprüche

1. Drahtloskommunikationsnetz für Innenräume (600), Folgendes umfassend:
mehrere, mindestens drei, Drahtloskommunikationsmodule (6101 bis 6116), von denen jedes in einer dazugehörigen Leuchtvorrichtung für Innenräume angeordnet ist, wobei die mehreren Drahtloskommunikationsmodule (6101 bis 6116) eingerichtet sind, um miteinander kommunizieren und mit Vorrichtungen in der Nähe kommunizieren zu können; und
einen oder mehrere Ausleitknoten (620), die eingerichtet sind, eine Kommunikationsverbindung mit den Drahtloskommunikationsmodulen (6101 bis 6116) herstellen und eine Kommunikationsverbindung mit einem Netz herstellen zu können, das extern zu dem Drahtloskommunikationsnetz für Innenräume (600) ist,
wobei die Drahtloskommunikationsmodule (6101 bis 6116) Netzknoten des Drahtloskommunikationsnetzes für Innenräume (600) bilden, um so eine Datenübertragung innerhalb des Drahtloskommunikationsnetzes für Innenräume (600) zu realisieren, und als Zugangsknoten zu funktionieren, die bidirektional mit Drahtlosvorrichtungen kommunizieren, die extern zu dem Kommunikationsnetz für Innenräume (600) sind, um so Zugangsdienste bereitzustellen,
wobei die Leuchtvorrichtung eine LED-Leuchtvorrichtung ist, die eine adaptive Stromversorgung umfasst, und jedes der Drahtloskommunikationsmodule in die adaptive Stromversorgung integriert ist und durch die adaptive Stromversorgung versorgt wird.

2. Drahtloskommunikationsnetz für Innenräume (600) nach Anspruch 1, wobei jedes der Drahtloskommunikationsmodule (6101 bis 6116) weiterhin eingerichtet ist, um den Drahtlosvorrichtungen eine Zugangsfähigkeit in jeweiligen Abdeckungsbereichen bereitzustellen, damit sie auf das Drahtloskommunikationsnetz für Innenräume (600) zugreifen können.

3. Drahtloskommunikationsnetz für Innenräume (600) nach Anspruch 1, wobei die mehreren Drahtloskommunikationsmodule (6101 bis 6116) in mehrere Netzknotengruppen (61A bis 61D) aufgeteilt sind, und für jede der Netzknotengruppen (61A bis 61D) eine Kommunikation zwischen Drahtloskommunikationsmodulen (6101 bis 6116) innerhalb von ihr auf dem gleichen Kommunikationsprotokoll basiert.

4. Drahtloskommunikationsnetz für Innenräume (600) nach Anspruch 3, wobei mindestens eines der Drahtloskommunikationsmodule (6101 bis 6116) in jeder Netzknotengruppe (61A bis 61D) als ein Weglenkungsknoten (6116, 6107, 6104, 6110) festgelegt ist, der eingerichtet ist, um für eine Kommunikation zwischen dieser Netzknotengruppe (61A bis 61D) und dem Ausleitknoten (620) und zwischen dieser Netzknotengruppe (61A bis 61D) und Weglenkungsknoten (6116, 6107, 6104, 6110) anderer Netzknotengruppen (61A bis 61D) verantwortlich zu sein.

5. Drahtloskommunikationsnetz für Innenräume (600) nach Anspruch 4, wobei das Kommunikationsprotokoll, das für die Kommunikation zwischen den Weglenkungsknoten (6116, 6107, 6104, 6110) oder zwischen den Weglenkungsknoten (6116, 6107, 6104, 6110) und den Ausleitknoten (620) verwendet wird, verschieden ist von dem Kommunikationsprotokoll, das zur internen Kommunikation innerhalb der Netzknotengruppen (61A bis 61D) verwendet wird.

6. Drahtloskommunikationsnetz für Innenräume (600) nach Anspruch 3, wobei mindestens ein Drahtloskommunikationsmodul (6101 bis 6116) in jeder Netzknotengruppe (61A bis 61D) als ein Hauptzugangsknoten (6104, 6106, 6114, 6116) festgelegt ist, und dementsprechend Drahtloskommunikationsmodule der anderen Nicht-Weglenkungsknoten als Hilfszugangsknoten festgelegt sind, wobei der Hauptzugangsknoten (6104, 6106, 6114, 6116) eingerichtet ist, um eine Initialisierungskonfiguration und dynamische Konfiguration für die Netzknotengruppe (61A bis 61D), zu der er gehört, sowie eine Kommunikation mit den Hilfszugangsknoten und dem Weglenkungsknoten (6116, 6107, 6104, 6110) durchzuführen.

7. Internetsystem der Dinge (520), umfassend eine Cloud-Rechnerplattform (512) und ein Drahtloskommunikationsnetz für Innenräume (511), Folgendes umfassend
mehrere, mindestens drei, Drahtloskommunikationsmodule (511A bis 511D), von denen jedes in einer dazugehörigen Leuchtvorrichtung für Innenräume angeordnet ist, wobei die mehreren Drahtloskommunikationsmodule (511A bis 511D) eingerichtet sind, um miteinander kommunizieren und mit Vorrichtungen in der Nähe kommunizieren zu können (521, 522); und
einen oder mehrere Ausleitknoten (511E), die eingerichtet sind, eine Kommunikationsverbindung mit den Drahtloskommunikationsmodulen (511A bis 511D) herstellen und eine Kommunikationsverbindung mit der Cloud-Rechnerplattform (512) herstellen zu können,
wobei die Cloud-Rechnerplattform (512) eingerichtet ist, um eine Autorisierung zu verwalten, die einem Client (531, 532) gewährt wird, um eine Kommunikationsverbindung mit den Vorrichtungen (521, 522) durch Verbinden mit dem Drahtloskommunikationsnetz für Innenräume (510) über die Ausleitknoten (511E) herzustellen,
wobei die Drahtloskommunikationsmodule (511A bis 511D) Netzknoten (511A bis 511D) des Drahtloskommunikationsnetzes für Innenräume bilden, um so eine Datenübertragung innerhalb des Drahtloskommunikationsnetzes für Innenräume zu realisieren, und als Zugangsknoten (511A, 511D) zu funktionieren, die bidirektional mit Drahtlosvorrichtungen (521, 422) kommunizieren, die extern zu dem Kommunikationsnetz für Innenräume (510) sind, um so Zugangsdienste bereitzustellen,
wobei die Leuchtvorrichtung eine LED-Leuchtvorrichtung ist, die eine adaptive Stromversorgung umfasst, und jedes der Drahtloskommunikationsmodule (511A bis 511D) in die adaptive Stromversorgung integriert ist und durch die adaptive Stromversorgung versorgt wird.

8. Internetsystem der Dinge (520) nach Anspruch 7, wobei die Cloud-Rechnerplattform (512) weiterhin eingerichtet ist, um eine Autorisierung zu verwalten, die dem Client (531, 532) gewährt wird, um die Vorrichtungen (521, 522) zu betreiben.

9. Internetsystem der Dinge (520) nach Anspruch 8, wobei ein Betrieb der Vorrichtungen (521, 522) durch den Client (531, 532) Erfassen von Betriebszuständen der Vorrichtungen (521, 522) und Steuern eines Betriebs der Vorrichtungen (521, 522) umfasst.

## Revendications

1. Réseau de communication sans fil en intérieur (600), comprenant :
une pluralité, au moins trois, de modules de communication sans fil (6101-6116), chacun étant disposé dans un dispositif d'éclairage en intérieur associé, la pluralité des modules de communication sans fil (6101-6116) sont configurés pour être capables de communiquer les uns avec les autres et de communiquer avec des dispositifs à proximité ; et
un ou plusieurs nœuds récepteurs (620) configurés pour être capables d'établir une connexion de communication avec les modules de communication sans fil (6101-6116) et d'établir une connexion de communication avec un réseau externe au réseau de communication sans fil en intérieur (600),
dans lequel les modules de communication sans fil (6101-6116) constituent des nœuds de réseau du réseau de communication sans fil en intérieur (600) de façon à réaliser une transmission de données à l'intérieur du réseau de communication sans fil en intérieur (600), et fonctionnent en tant que nœuds d'accès qui communiquent de manière bidirectionnelle avec des dispositifs sans fil externes au réseau de communication en intérieur (600) de façon à fournir des services d'accès,
dans lequel le dispositif d'éclairage est un dispositif d'éclairage DEL, qui comprend une alimentation adaptative, et chacun des modules de communication sans fil est intégré dans l'alimentation adaptative et est fourni par l'alimentation adaptative.

2. Réseau de communication sans fil en intérieur (600) selon la revendication 1, dans lequel chacun des modules de communication sans fil (6101-6116) est configuré en outre pour fournir une capacité d'accès aux dispositifs sans fil dans des zones de couverture respectives pour qu'ils accèdent au réseau de communication sans fil en intérieur (600).

3. Réseau de communication sans fil en intérieur (600) selon la revendication 1, dans lequel la pluralité des modules de communication sans fil (6101-6116) sont divisés en une pluralité de groupes de nœuds de réseau (61A - 61D), et pour chacun des groupes de nœuds de réseau (61A - 61D), une communication entre des modules de communication sans fil (6101-6116) à l'intérieur est basée sur le même protocole de communication.

4. Réseau de communication sans fil en intérieur (600) selon la revendication 3, dans lequel au moins un des modules de communication sans fil (6101-6116) dans chaque groupe de nœuds de réseau (61A - 61D) est désigné en tant que nœud de routage (6116, 6107, 6104, 6110) configuré pour être responsable d'une communication entre ce groupe de nœuds de réseau (61A - 61D) et les nœuds récepteurs (620) et entre ce groupe de nœuds de réseau (61A - 61D) et des nœuds de routage (6116, 6107, 6104, 6110) des autres groupes de nœuds de réseau (61A - 61D).

5. Réseau de communication sans fil en intérieur (600) selon la revendication 4, dans lequel le protocole de communication utilisé pour la communication entre les nœuds de routage (6116, 6107, 6104, 6110) ou entre les nœuds de routage (6116, 6107, 6104, 6110) et les nœuds récepteurs (620) est différent du protocole de communication utilisé pour une communication interne dans les groupes de nœuds de réseau (61A - 61D).

6. Réseau de communication sans fil en intérieur (600) selon la revendication 3, dans lequel au moins un module de communication sans fil (6101-6116) dans chaque groupe de nœuds de réseau (61A - 61D) est désigné en tant que nœud d'accès principal (6104, 6106, 6114, 6116), et de manière correspondante, des modules de communication sans fil d'autres nœuds de non-routage sont désignés en tant que nœuds d'accès auxiliaires, le nœud d'accès principal (6104, 6106, 6114, 6116) étant configuré pour mener une configuration d'initialisation et une configuration dynamique pour le groupe de nœuds de réseau (61A - 61D) auquel il appartient ainsi qu'une communication avec les nœuds d'accès auxiliaires et le nœud de routage (6116, 6107, 6104, 6110).

7. Système de l'Internet des objets (520) comprenant une plate-forme informatique en nuage (512) et un réseau de communication sans fil en intérieur (511), comprenant une pluralité, au moins trois, de modules de communication sans fil (511A - 511D), chacun étant disposé dans un dispositif d'éclairage en intérieur associé, la pluralité des modules de communication sans fil (511A - 511D) sont configurés pour être capables de communiquer les uns avec les autres et de communiquer avec des dispositifs à proximité (521, 522) ; et
un ou plusieurs nœuds récepteurs (511E) configurés pour être capables d'établir une connexion de communication avec les modules de communication sans fil (511A - 511D) et d'établir une connexion de communication avec la plate-forme informatique en nuage (512),
dans lequel la plate-forme informatique en nuage (512) est configurée pour gérer une autorité accordée à un client (531, 532) pour établir une connexion de communication avec lesdits dispositifs (521, 522) en se connectant au réseau de communication sans fil en intérieur (510) par le biais des nœuds récepteurs (511E),
dans lequel les modules de communication sans fil (511A - 511D) constituent des nœuds de réseau (511A - 511D) du réseau de communication sans fil en intérieur de façon à réaliser une transmission de données à l'intérieur du réseau de communication sans fil en intérieur, et fonctionnent en tant que nœuds d'accès (511A - 511D) qui communiquent de manière bidirectionnelle avec des dispositifs sans fil (521, 422) externes au réseau de communication en intérieur (510) de façon à fournir des services d'accès,
dans lequel le dispositif d'éclairage est un dispositif d'éclairage DEL, qui comprend une alimentation adaptative, et chacun des modules de communication sans fil (511A - 511D) est intégré dans l'alimentation adaptative et est fourni par l'alimentation adaptative.

8. Système de l'Internet des objets (520) selon la revendication 7, dans lequel la plate-forme informatique en nuage (512) est configurée en outre pour gérer une autorité accordée au client (531, 532) pour utiliser les dispositifs (521, 522).

9. Système de l'Internet des objets (520) selon la revendication 8, dans lequel le fonctionnement sur les dispositifs (521, 522) par le client (531, 532) consiste à acquérir des états opérationnels des dispositifs (521, 522) et à commander le fonctionnement des dispositifs (521, 522).
